# EUROPEAN PATENT APPLICATION

(11) **EP 0 749 036 A1**
(43) Date of publication of application: **18.12.1996**
(21) Application number: 96304431.8
(22) Date of filing: 13.06.1996
(51) Int. Cl.: G03B 27/58

(54) **Cassette**

(30) Priority: 14.06.1995 GB 9512072
(71) Applicant: CROSFIELD ELECTRONICS LIMITED, Hemel Hempstead Hertfordshire HP2 7RH (GB)
(72) Inventor: Bauer, Otto Peter, Barnet, Herts, EN4 0HN (GB)
(74) Representative: Skone James, Robert Edmund

(57) **Abstract**

A cassette for receiving and storing a photographic film sheet, the cassette comprising a housing have a slot (20) through which the film sheet is introduced in use into the cassette. An unpowered, rotatable take-up core (2) is provided in the housing (1) onto which the sheet is wound. One or more chains (6-10) are wrapped around the core (2), the or each chain comprising a plurality of linked members, whereby in use the sheet (21) is introduced through the slot and is held against the take-up core by the chain or chains. Movement of the sheet (21) into the cassette causes the take-up core (2) to rotate so that the sheet is wound onto the take-up core. The or each chain (6-10) is adapted to expand as the sheet is wound onto the take-up core (2).

## Description

The present invention relates to a cassette for receiving and storing a photographic film sheet from a setting machine such as an imagesetter.

An example of a film take-up cassette is described in US-A-4218032 in which a film is wound around a driven core. A link chain extends around the core and moves radially outwardly as more film is loaded onto the core. This link chain ensures that neighbouring convolutions of the film on the core are tightly packed against each other.

DE-A-3034081 describes a modification of the cassette shown in US-A-4218032. In this case, an inlet path for the film is defined by a pair of bands, one of which is defined by part of the link chain.

A further conventional film take-up cassette is described in WO 91/17475. A series of belts are wound round the take-up core and serve to drive the take-up core as well as holding the film against the take-up core. The belts also pass round a drive pulley. As the film is wound onto the take-up core, the belts expand and the take-up core (which is not journalled to the cassette housing) moves laterally to accommodate the increased size of take-up core and film.

In all these known arrangements, the core within the cassette has to be driven during a film loading operation so that the film is loaded onto the core. This requires that a drive linkage must be provided to connect the core to a prime mover and leads to additional complexity when the cassette is utilised to store a film from an image setter or the like since it is necessary either to match the speeds at which the film is driven out of the imagesetter and taken up by the cassette or to switch off the drive system so that only one drive operates at any one time.

In accordance with one aspect of the present invention, we provide a cassette for receiving and storing a photographic film sheet, the cassette comprising a housing having a slot through which the film sheet is introduced in use into the cassette; an unpowered rotatable take-up core in the housing onto which the sheet is wound; and one or more chains wrapped around the core, the or each chain comprising a plurality of linked members, whereby in use the sheet is introduced through the slot and is held against the take-up core by the chain or chains, movement of the sheet into the cassette causing the take-up core to rotate so that the sheet is wound onto the take-up core, and wherein the or each chain is adapted to expand as the sheet is wound onto the take-up core.

In accordance with a second aspect of the present invention, a method of loading a sheet into a cassette according to the first aspect of the invention comprises pushing the sheet through the slot, the sheet being guided between the or each chain and the take-up core, the movement of the sheet causing the take-up core to rotate so that the sheet is wound onto the take-up core, and wherein the or each chain expands as the sheet is wound onto the take-up core.

We have realised that it is possible to make use of a cassette with an undriven, rotatable take-up core thus considerably simplifying the construction of the cassette and the manner in which the cassette is used. The energy for winding the film onto the take-up core is provided by the film itself, and not by a take-up core driving mechanism. This results in a particularly efficient, simple and compact system for storing a roll of film on the take-up core. The or each chain expands to accommodate the increased combined diameter of take-up core and film as the film is wound on.

Typically the linked members comprise wheels or rollers which rotate along with the take-up core as the film is wound onto the take-up core. This results in low resistive force in the plane of the film which allows the film to be easily fed in without having to separately drive the take-up core and also prevents the film from buckling as it enters the nip between the chain/s and the take-up core.

The film may be loaded into the cassette manually, but typically is fed from a setting machine such as an imagesetter by the setting machine loading mechanism.

Typically the chain/s comprise a plurality of pairs of wheels or rollers which contact and rotate with the film. The pairs of wheels or rollers are typically connected by an axle which is connected to substantially rigid links which connect adjacent pairs of wheels or rollers.

The axle may be journalled in separate links which connect with adjacent axles. Alternatively the axle may be part of a unitary linking member (which is preferably plastic injection moulded) which is connected (preferably by a snap-fit) to adjacent axles.

The chain may be fixed at both ends and may expand uniformly along its length. However this is likely to result in an increased contact force on the film as the chain expands.

Therefore, preferably the or each chain includes one or more links which expand to allow the total length of the chain to increase whilst the rest of the chain maintains its length (due to the rigid links between adjacent wheels or pairs of wheels or rollers). The link/s may be provided at intermediate points in the chain, but preferably comprise a single link which terminates the chain. Typically the link is a resilient member such as a spring which provides a substantially constant force between adjacent links in the chain whilst expanding. This ensures that the chain applies a substantially constant force to the film/take-up core as it expands. Typically the spring is a coil spring fixed at one end to the housing and at the other end to the last wheel/s in the chain which extends to allow the total length of the chain to increase.

An embodiment of a film cassette according to the present invention will now be described with reference to the accompanying drawings, in which:-
Figure 1 is a schematic plan of the cassette with part of the housing removed;
Figure 2 is an enlarged view of part of one of the chains shown in Figure 1;
Figure 3 is an enlarged cross-section of the cassette on the line A-A in Figure 1;
Figure 4 is a plan view of an alternative chain link;
Figure 5 is a side view of the chain link shown in Figure 4; and,
Figure 6 is a plan view of part of a chain including links as illustrated in Figures 4 and 5.

The cassette shown in the drawings comprises an outer housing 1 containing a take-up core comprising a cylindrical roller 2 journalled to the end walls lA,lB of the housing by bearings 4 and 5. Five chains 6-10 are wrapped around the roller 2.

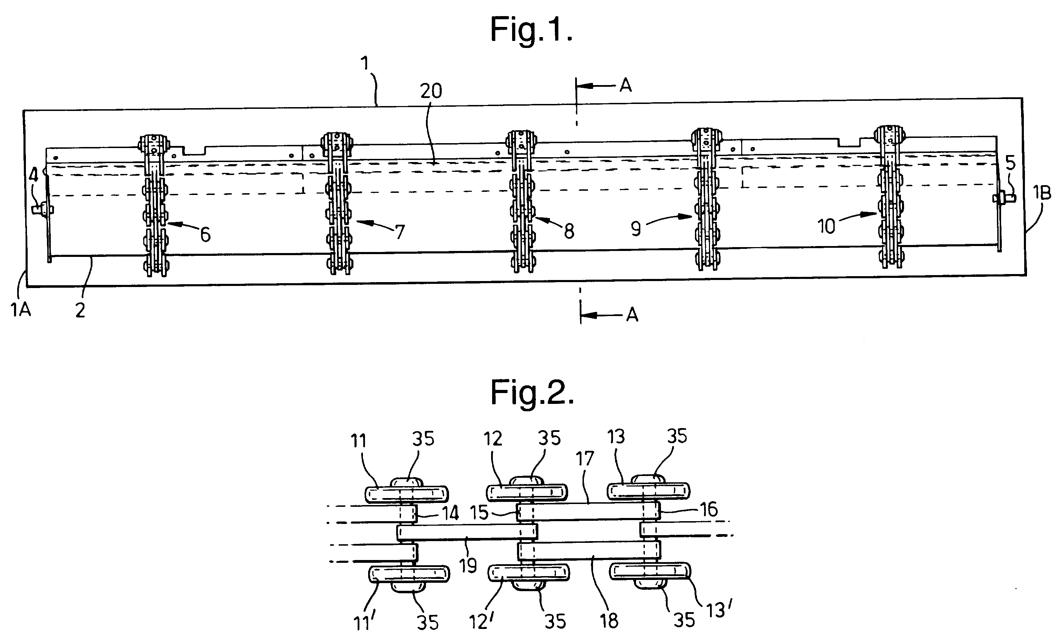

Figure 2 illustrates part of one of the chains 6-10 in more detail. Each chain comprises a set of pairs of plastic wheels 11,11',12,12',13,13' etc. Each wheel is connected to an opposite wheel by a stainless steel axle 14,15,16 (indicated in dotted lines). Each wheel is mounted such that it can rotate about its respective axle and is loosely held by end flanges 35 fixed to the axle. Each axle 14-16 extends through aligned holes in three aluminium chain links which join each pair of wheels to the two adjacent pairs. For instance, the axle 15 extends through holes in chain links 17-19, the chain links 17-19 being loosely mounted to the axle 15.

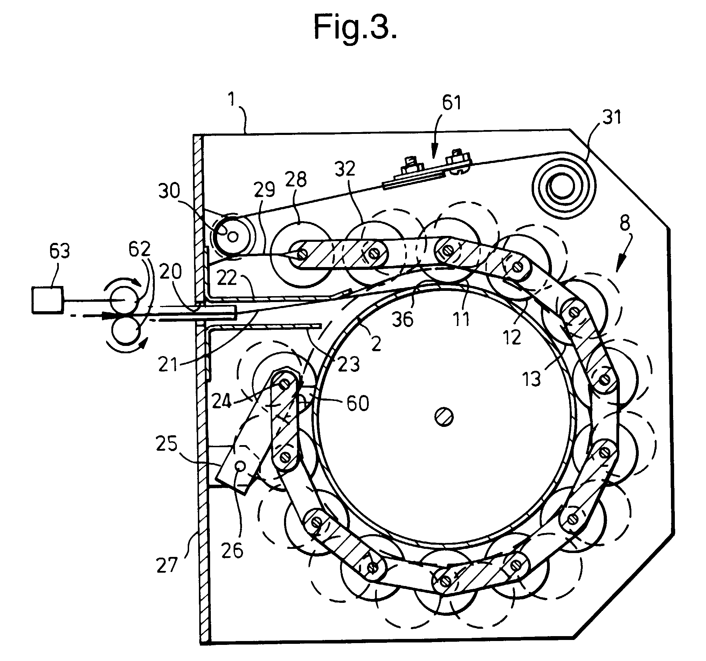

Figure 3 illustrates the construction of the cassette in more detail. As can be seen, the front face 27 of the housing 1 has an entry slot 20 through which a film 21 is fed in use. Behind the slot 20 are mounted a pair of fixed laterally spaced guides 22,23 which extend from the slot 20 to a position adjacent the take-up roller 2. One end of the link chain 8 is connected to the housing 1 via a link 25 which is pivoted to a support 26 fixed to the front wall 27 of the housing 1 and which is pivotally connected to an axle 24 (similar to axles 14-16) about which rollers 60 are pivoted.

The other end of the link chain 8 is connected to a wire 29 which extends around a pulley 30 mounted to the front wall 27 of the housing 1, the wire 29 being connected via a connector 61 to one end of a constant force coil spring 31, the other end of which is anchored to the housing 1.

As can be seen in Figure 1, five link chains 6-10 are provided all having a form similar to the link chain 8 shown in more detail in Figure 3. By providing a number of link chains it is possible to accommodate different film widths within the same cassette. Thus, only the three middle chains 7-9 are required for film widths of 356 or 510mm, whereas the outer chains 6 and 10 are brought into play if 660mm or 761mm film is fed in.

In use, the cassette will be mounted adjacent an outlet position of an imagesetter so that the film 21 being fed out of the imagesetter is pushed into the slot 20. This is shown schematically in Figure 3 where drive rollers of the imagesetter are shown at 62 connected to a prime mover 63 of the imagesetter. The rest of the imagesetter has been omitted for clarity.

As the film 21 is fed into the slot 20 and between the guides 22,23, it enters a nip 36 formed by the roller 2, and the first pair of wheels 11,11' in contact with the roller 2. Before any film is wound onto the roller 2 (as shown in Figure 3) the first two sets of wheels 28,32 do not contact the roller 2. As the film enters the nip 36, it causes the take-up roller 2 (and hence the wheels (11,11'), (12,12') etc.) to rotate. The film 21 is then wrapped onto the take-up roller 2 while being pressed towards the roller 2 by the tension in the chains 6-10 due to the springs 31. The combined diameter of the roller 2 and film grows as film is wound around the roller. In order to accommodate this the springs 31 expand to allow the chains 6-10 to expand as indicated in dotted lines in Figure 3. As the chains expand further, spare chain links and wheels 28, 32 are drawn onto the roller 2 to come into contact with the film.

The take-up cassette is not powered, and rotation is dependent entirely on the film being pushed in by the film transport mechanism 62 provided by the image setter. It is therefore necessary for the resistive force presented by the cassette to be low and approximately constant to allow the film to be pushed in by the imagesetter film transport mechanism without collapsing. This is ensured by the wheels of the chains 6-10 which rotate as the film is wound onto the rotating roller 2. Springs 31 ensure a light and constant contact force between each wheel and the film 21/roller 2.

Instead of the pairs of wheels 11,11' etc., the chains may comprise a plurality of linked single wheels, rollers or any other means of ensuring a smooth frictional force between the chain/s and the film.

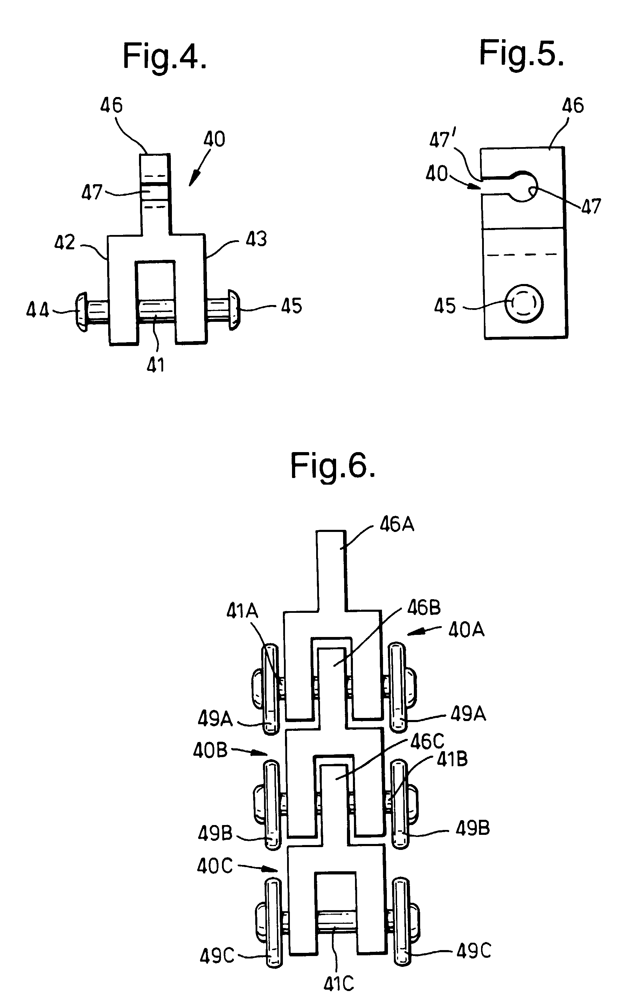

An alternative form of chain link is illustrated in Figures 4 to 6.

Figure 4 is a plan view of the alternative chain link, which comprises a single plastic injection moulded link 40. An axle 41 passes loosely through holes in arms 42,43 and is terminated with flanges 44,45. As shown more clearly in the side view of Figure 5, the single arm 46 has a recess 47 and entry slot 47'.

Figure 6 shows part of a link chain formed by links similar to those shown in Figures 4 and 5. Three links 40A-40C are shown, each constructed in a manner similar to the link 40. As can be seen in Figure 6, the link 40B is connected to the link 40A via the axle 41A which snaps into the recess 47 of the arm 46B. In a similar way, the link 40C is connected to the link 40B via the axle 41B which snaps into the recess 47 of the arm 46C. As also can be seen in Figure 6, each axle 41A-41C carries a pair of wheels 49A-49C which are also snapped over the flanges 44,45 and rotate about the respective axles.

## Claims

1. A cassette for receiving and storing a photographic film sheet, the cassette comprising a housing having a slot through which the film sheet is introduced in use into the cassette; an unpowered, rotatable take-up core in the housing onto which the sheet is wound; and one or more chains wrapped around the core, the or each chain comprising a plurality of linked members, whereby in use the sheet is introduced through the slot and is held against the take-up core by the chain or chains, movement of the sheet into the cassette causing the take-up core to rotate so that the sheet is wound onto the take-up core; and wherein the or each chain is adapted to expand as the sheet is wound onto the take-up core.

2. A cassette according to claim 1, wherein each linked member comprises one or more wheels or rollers.

3. A cassette according to claim 1 or 2 wherein the or each chain comprises a resilient member.

4. A cassette according to claim 3, wherein the or each chain is terminated at one end by the resilient member.

5. A cassette according to claim 3 or 4, wherein the resilient member comprises a constant force coil spring which extends to allow the chain to expand.

6. A cassette according to claim 5, wherein the coil spring is fixed at one end to the chain and at the other end to the housing of the cassette.

7. A cassette according to any of the preceding claims wherein each linked member comprises a pair of wheels or rollers pivotally connected to adjacent pairs of wheels by substantially rigid links.

8. A cassette according to claim 7, wherein each pair of wheels or rollers is mounted on a unitary linking member, each linking member being connected to adjacent linking members.

9. A cassette according to any of the preceding claims wherein the or each chain is terminated by a pivoting link, fixed at one end relative to the housing.

10. A method of loading a sheet into a cassette according to any of the preceding claims, the method comprising pushing the sheet through the slot, the sheet being guided between the or each chain and the take-up core, the movement of the sheet causing the take-up core to rotate so that the sheet is wound onto the take-up core and wherein the or each chain expands as the sheet is wound onto the take-up core.

11. A method according to claim 10, wherein the sheet is a photographic film.

12. A method according to claim 11, wherein the cassette is positioned to receive the photographic film from an imagesetter, movement of the sheet being caused by the imagesetter.
